# NEUE EUROPÄISCHE PATENTSCHRIFT

(11) **EP 3 303 036 B2**
(45) Veröffentlichungstag und Bekanntmachung des Hinweises auf die Entscheidung über den Einspruch: **26.01.2022**
(45) Hinweis auf die Patenterteilung: 25.09.2019
(21) Anmeldenummer: 16720366.0
(22) Anmeldetag: 15.04.2016
(51) Int. Cl.: B60K 6/48, B60K 6/40, F16F 15/14, F16D 13/00

(54) **HYBRID-ANTRIEBSMODUL FÜR EIN KRAFTFAHRZEUG**
HYBRID DRIVE MODULE FOR A MOTOR VEHICLE
MODULE D'ENTRAÎNEMENT HYBRIDE POUR UN VÉHICULE À MOTEUR

(30) Priorität: 29.05.2015 DE 102015209898
(43) Veröffentlichungstag der Anmeldung: 11.04.2018
(73) Patentinhaber: Volkswagen Aktiengesellschaft, 38440 Wolfsburg (DE)
(72) Erfinder: GORGES, Sebastian, 59964 Medebach-Dreislar (DE); KOLZE, Fabian, 39179 Barleben (DE)
(86) Internationale Anmeldenummer: PCT/EP2016/058352
(87) Internationale Veröffentlichungsnummer: WO 2016/192884

(56) Entgegenhaltungen:
- EP-A1- 2 101 396
- WO-A1-2016/070878
- DE-A1-102004 027 529
- DE-A1-102008 057 648
- DE-A1-102009 024 530
- DE-A1-102009 038 416
- DE-A1-102009 059 944
- DE-A1-102010 008 440
- DE-A1-102010 015 431
- DE-A1-102010 018 774
- DE-A1-102010 030 690
- DE-A1-102010 063 388
- DE-A1-102012 219 028
- DE-A1-102012 219 728
- DE-A1-102012 222 533
- Matthias Zink, Et Al: "Das Fliehkraftpendel Anwendung, Leistung und Grenzen drehzahladaptiver Tilger", ATZ 07-08I2009, 1 August 2009 (2009-08-01), pages 546-553,
- REIK W.: "HOEHERER KOMFORT UND WENIGER GERAEUSCH DURCH DAS ZWEIMASSENSCHWUNGRAD.", ATZ, Springer Vieweg, DE, vol. 100., no. 12., 1 December 1998 (1998-12-01), pages 896-900., DE ISSN: 0001-2785
- T Hensel, Et Al: "The new plug-in transmission from ZF", International VDI Conference Drivetrain for Vehicles 2014, 1 January 2014 (2014-01-01), pages 133-146,
- H Dresig, Et Al: "Torsionsschwingungen im KFZ-Antriebstrang" In: "Schwingungen mechanischer Antriebssysteme", 1 January 2014 (2014-01-01), Springer pages 473,480-481,511,
- Anonymous: "Der Drehzahladaptive Tilger DAT Der Technologiesprung im Antriebsstrang", ATZ 9/2001 Jahrgang 103, 1 January 2001 (2001-01-01), pages 758-765,
- Hofmann: "Hybridkomponenten" In: "Hybridfahrzeuge", 1 January 2014 (2014-01-01), Springer pages 145,194-195,

## Beschreibung

Die Erfindung betrifft ein Hybrid-Antriebsmodul für ein Kraftfahrzeug mit den Merkmalen des Oberbegriffs des Patentanspruchs 1.

Im Stand der Technik sind unterschiedlich ausgebildete Hybrid-Antriebsmodule für Kraftfahrzeuge bekannt. Im Allgemeinen weisen Hybrid-Antriebsmodule einen Verbrennungsmotor, eine Elektromaschine und eine Kupplung auf. Die Kupplung dient einerseits zur wirksamen Verbindung des Verbrennungsmotors mit dem Getriebe des Kraftfahrzeugs, nämlich zur Ankopplung bzw. Entkopplung des Verbrennungsmotors an eine Getriebeeingangswelle, oder auch andererseits - je nach spezifischer Ausgestaltung - zur wirksamen Verbindung der Elektromaschine mit dem Getriebe des Kraftfahrzeugs, nämlich zur Ankopplung bzw. Entkopplung der Elektromaschine an die Getriebeeingangswelle. Weiterhin ist ein Zweimassenschwungrad und ein Fliehkraftpendel vorgesehen. Das Zweimassenschwungrad und das Fliehkraftpendel dienen als "Schwingungstilger" zur Dämpfung von unerwünschten Drehmomentschwingungen. Im Stand der Technik sind Ausführungsformen von Hybrid-Antriebsmodulen bekannt, wobei das Zweimassenschwungrad und das Fliehkraftpendel räumlich voneinander getrennt angeordnet sind.

Im Stand der Technik, von dem die Erfindung ausgeht, ist ein Hybrid-Antriebsmodul für ein Kraftfahrzeug bekannt, wobei die Kupplung einen Außenlamellenträger und einen Innenlamellenträger aufweist und zwischen dem Außenlamellenträger und dem Innenlamellenträger entsprechende Außenlamellen und Innenlamellen zu einem Lamellenpaket geschichtet sind. Der Rotor der Elektromaschine ist nun mit dem Außenlamellenträger der Kupplung wirksam verbunden, wobei der Außenlamellenträger auch mit einer Getriebeeingangswelle wirksam verbunden oder verbindbar ist. Der Innenlamellenträger ist hierbei mit dem Verbrennungsmotor bzw. mit der Verbrennungsmaschine wirksam verbindbar bzw. verbunden. Der Schwingungstilger ist durch ein Zweimassenschwungrad und ein Fliehkraftpendel gebildet, die räumlich voneinander getrennt angeordnet sind.

So ist im Stand der Technik aus der DE 10 2014 206 330 A1 ein Hybrid-Antriebsmodul bekannt, bei dem ein Zweimassenschwungrad und ein Fliehkraftpendel räumlich voneinander getrennt angeordnet sind und wobei das Fliehkraftpendel im Wesentlichen mit dem Außenlamellenträger verbunden ist.

Weiterhin ist im Stand der Technik aus der DE 10 2010 018 774 A1 ein Hybrid-Antriebsmodul für ein Doppelkupplungsgetriebe eines Kraftfahrzeuges bekannt, wobei das Zweimassenschwungrad im Trockenraum zwischen einem Antrieb und der Doppelkupplung und das Fliehkraftpendel im Nass raum der Doppelkupplung angeordnet sind. Hierbei sind sowohl das Zweimassenschwungrad als auch das Fliehkraftpendel wirksam mit dem Außenlamellenträger der Doppelkupplung verbunden.

Schließlich ist im Stand der Technik aus der DE 10 2012 203 611 A1 ein Torsionsdämpfer bzw. ein Schwingungstilger bekannt, wobei ein Zweimassenschwungrad und ein Fliehkraftpendel vorgesehen ist und das Fliehkraftpendel mit dem Rotor der Elektromaschine gekoppelt ist.

Im Stand der Technik, von dem die Erfindung ausgeht, sind das Zweimassenschwungrad und das Fliehkraftpendel räumlich voneinander getrennt, wobei das Zweimassenschwungrad mit seiner Primärseite mit der Motorwelle des Verbrennungsmotors bzw. mit der Verbrennungsmaschine wirksam verbunden ist und mit seiner Sekundärseite mit der Eingangswelle der Kupplung wirksam verbunden ist. Das Fliehkraftpendel ist hierbei mit einem Außenlamellenträger bzw. mit dem Rotorträger der Elektromaschine wirksam verbunden. Problematisch ist insbesondere, dass das Zweimassenschwungrad über die Kupplung mit dem Fliehkraftpendel dann wirksam gekoppelt wird, nämlich dann, wenn die Kupplung geschlossen ist. Dadurch bedingt muss die Kupplung nun höhere Drehmomente übertragen, insbesondere werden auch sogenannte "Drehmomentschwingungen" entsprechend über die Kupplung mit übertragen. Daher ist die Auslegung bzw. die effektive Wirkung des Fliehkraftpendels problematisch, da nun bei der Dimensionierung des Fliehkraftpendels auch der Einfluss der Kupplung entsprechend zu berücksichtigen ist bzw. bei der Dimensionierung der Kupplung der Einfluss des Fliehkraftpendels zu berücksichtigen ist. Der hier dann durch das Zweimassenschwungrad, die Kupplung und das Fliehkraftpendel realisierte "Schwingungstilger" ist daher problematisch umzusetzen bzw. dessen Auslegung/Realisierung ist sehr komplex, da insbesondere auch der Einfluss der Kupplung und die damit einhergehenden Effekte wie Mikro-/Makro-Schlupf etc. zu berücksichtigen sind.

Der Erfindung liegt daher die Aufgabe zugrunde, dass gattungsgemäße Hybrid-Antriebsmodul, von dem die Erfindung ausgeht, nun derart auszugestalten und weiterzubilden, dass die Auslegung eines Schwingungstilgers vereinfacht ist, insbesondere die durch die Kupplung hervorgerufenen Effekte wie beispielsweise ein Mikro-/Makro-Schlupf eliminiert sind, sowie auch die Dimensionierung der Kupplung vereinfacht ist.

Die zuvor aufgezeigte Aufgabe ist nun zunächst durch die Merkmale des Patentanspruches 1 gelöst.

Dadurch, dass nun das Fliehkraftpendel wirksam mit dem Innenlamellenträger verbunden ist sind zwar das Zweimassenschwungrad und das Fliehkraftpendel räumlich voneinander getrennt, können aber dennoch gemeinsam auf der Primärseite der Kupplung als ein "Schwingungstilger" wirken, wobei mögliche Effekte der Kupplung nun keinen Einfluss mehr haben.

Das Fliehkraftpendel ist direkt an dem Innenlamellenträger angeordnet und/ oder direkt an dem Innenlamellenträger befestigt.
Das Zweimassenschwungrad ist mit dem Innenlamellenträger wirksam gekoppelt, insbesondere ist das Zweimassenschwungrad mit seiner Primärseite mit der Motorwelle des Verbrennungsmotors verbunden und mit seiner Sekundärseite mit der Eingangswelle der Kupplung verbunden.
Die Eingangswelle der Kupplung ist, insbesondere über eine Schweißverbindung mit dem Innenlamellenträger drehfest verbunden.

Damit eine kompakte Bauform des Hybrid-Antriebsmodul ermöglicht ist, weist der Außenlamellenträger nun eine spezifische Form auf, ist nämlich insbesondere L-förmig oder, insbesondere in einem bestimmten Endbereich C-förmig ausgebildet. Der Außenlamellenträger begrenzt insbesondere zumindest teilweise dann einen Raum zur Anordnung des Fliehkraftpendels.

Der Außenlamellenträger ist an seinem Umfang mit dem Rotorträger der Elektromaschine wirksam verbunden und/oder gekoppelt. Eine besonders kompakte Bauform des Hybrid-Antriebsmodul ist nun dadurch realisiert, dass ein insbesondere C-förmig ausgebildeter Außenlamellenträger mithilfe von Lagerelementen auf einem Absatz bzw. auf einem Flansch des Kühlmantels der Elektromaschine lagerbar ist. Die kompakte Bauform des Hybrid-Antriebsmoduls ist nun dadurch weiter optimiert, dass die Eingangswelle der Kupplung an einem Absatz bzw. Flansch des Kühlmantels gelagert ist und/oder der Außenlamellenträger über eine Mitnehmerscheibe mit der Getriebeeingangswelle insbesondere direkt wirksam verbunden ist.

Im Ergebnis sind insbesondere durch die kraft-, stoff- und/oder formschlüssige Verbindung des Fliehkraftpendels mit dem Zweimassenschwungrad die eingangs genannten Nachteile vermieden und entsprechende Vorteile erzielt, da hierdurch eine gemeinsame Funktionseinheit auf der Primärseite der Kupplung ausgebildet ist.

Es gibt nun eine Vielzahl von Möglichkeiten, das erfindungsgemäße Hybrid-Antriebsmodul in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
Fig. 1
in schematischer Darstellung ein erfindungsgemäßes Hybrid-Antriebsmodul, teilweise geschnitten von der Seite.

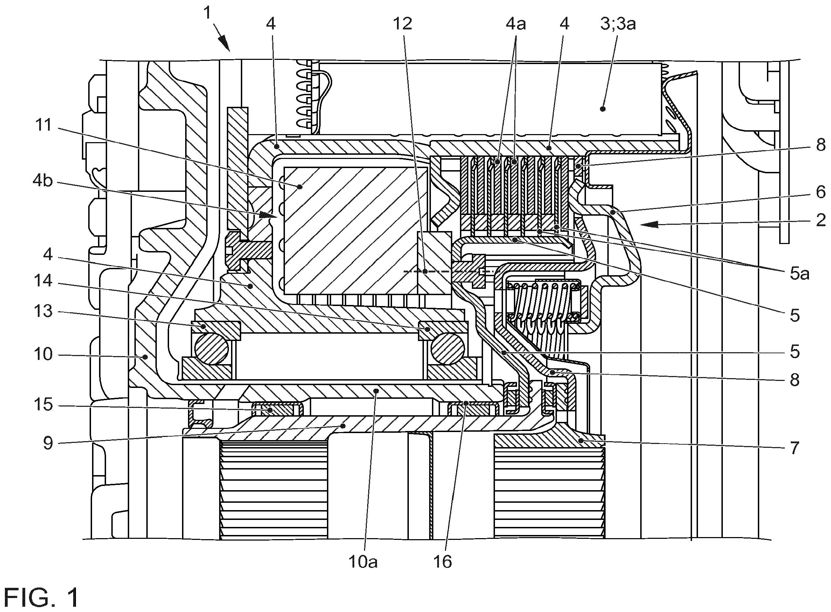

Die **Fig. 1** zeigt zumindest teilweise ein Hybrid-Antriebsmodul 1 für ein Kraftfahrzeug in sehr stark vereinfachter schematischer Darstellung.

Das Hybrid-Antriebsmodul 1 weist mindestens eine Kupplung 2 und mindestens eine Elektromaschine 3 auf. Die Elektromaschine 3 (bzw. der Elektromotor) weist einen Rotor 3a und einen nicht näher bezeichneten bzw. nicht näher dargestellten Stator auf. Die Kupplung 2 ist als so genannte "K0-Kupplung" ausgebildet und verbindet im geschlossenen Zustand die Motorwelle des Verbrennungsmotors wirksam mit einer Getriebeeingangswelle 7.

Die Kupplung 2 weist einen Außenlamellenträger 4 und einen Innenlamellenträger 5 auf. Am Außenlamellenträger 4 sind Außenlamellen 4a und am Innenlamellenträger 5 Innenlamellen 5a angeordnet. Die Außenlamellen 4a und die Innenlamellen 5a bilden zusammen ein nicht näher bezeichnetes Lamellenpaket, das über einen Betätigungskolben 6 druckbeaufschlagbar ist.

Der Außenlamellenträger 4 ist mit dem Rotor 3a der Elektromaschine 3 und mit einer Getriebeeingangswelle 7 bzw. mit einer entsprechenden Nabe für die Getriebeeingangswelle wirksam verbunden. Insbesondere ist der Rotor 3a der Elektromaschine 3 über einen Rotorträger mit dem Außenlamellenträger 4 verbunden. In der hier bevorzugten Ausführungsform dient der Außenlamellenträger 4 zugleich auch als ein Rotorträger. Weiterhin ist der Außenlamellenträger 4 über eine Mitnehmerscheibe 8 mit der Getriebeeingangswelle 7 bzw. mit der Nabe für die Getriebeeingangswelle verbunden. Ein Drehmoment kann daher von der Elektromaschine 3 über den Rotor 3a auf den Außenlamellenträger 4 und von dort über die Mitnehmerscheibe 8 auf die Getriebeeingangswelle 7 bzw. auf die entsprechende Nabe der Getriebeeingangswelle 7 übertragen werden. Letzteres wird insbesondere für den Elektroantrieb des Kraftfahrzeugs entsprechend realisiert.

Der Innenlamellenträger 5 der Kupplung 2 ist mit einem nicht näher dargestellten Verbrennungsmotor bzw. mit einer Verbrennungsmaschine wirksam verbunden. Insbesondere ist die Motorwelle des Verbrennungsmotors mit dem Innenlamellenträger 5, insbesondere über eine Eingangswelle 9 wirksam verbunden. Zwischen der Motorwelle des Verbrennungsmotors und der Eingangswelle 9 der Kupplung 2 ist ein Zweimassenschwungrad (ZMS) angeordnet, das mit seiner Primärseite mit der Motorwelle und mit seiner Sekundärseite mit der Eingangswelle 9 der Kupplung 2 wirksam verbunden ist. Bei geschlossener Kupplung 2 kann daher ein Drehmoment von dem Verbrennungsmotor auf den Innenlamellenträger 5, über das druckbeaufschlagte Lamellenpaket dann auf den Außenlamellenträger 4 und von hier aus über die Mitnehmerscheibe 8 auf die Getriebeeingangswelle 7 bzw. auf die entsprechende Nabe übertragen werden.

Es ist daher ein Zweimassenschwungrad und ein Fliehkraftpendel 11 vorgesehen. Das Zweimassenschwungrad und das Fliehkraftpendel 11 sind räumlich voneinander getrennt angeordnet, wobei in **Fig. 1** das Zweimassenschwungrad nicht dargestellt ist.

Das Fliehkraftpendel 11 ist wirksam mit dem Innenlamellenträger 5 verbunden.

Der "Schwingungstilger" der Hybrid-Anordnung bzw. des Hybrid-Antriebsmoduls 1 wird nun gebildet durch das Zweimassenschwungrad und durch das Fliehkraftpendel 11, die insbesondere kraft-, stoff- und/oder formschlüssig miteinander verbunden sind, insbesondere also mechanisch miteinander gekoppelt sind. Das Fliehkraftpendel 11 ist direkt an dem Innenlamellenträger 5 angeordnet und/oder befestigt, insbesondere über eine hier nur schematisch angedeutete Schraubverbindung 12. Das Fliehkraftpendel 11 kann aber auch am Innenlamellenträger 5 angeschweißt oder angenietet sein. Dadurch dass das Zweimassenschwungrad auch mit dem Innenlamellenträger 5, insbesondere über die Eingangswelle 9 wirksam gekoppelt ist, können mögliche Drehmomentschwingungen nun auf einer Seite der Kupplung 2 gedämpft bzw. kompensiert werden, ohne dass die Effekte der Kupplung 2 selbst berücksichtigt werden müssen.

Der Außenlamellenträger 4 ist nun im Wesentlichen L-förmig oder C-förmig ausgebildet. Insbesondere ist der Außenlamellenträger 4 zumindest teilweise, hier in **Fig. 1** in seinem linken Endbereich im Wesentlichen C-förmig ausgebildet, wie in der in **Fig. 1** dargestellten bevorzugten Ausführungsform gezeigt. Dies hat mehrere Vorteile. Der Außenlamellenträger 4 begrenzt nun einen Raum 4b, in dem das Fliehkraftpendel 11 anordenbar ist. Dadurch ist eine sehr kompakte Bauform ermöglicht.

Wie aus der **Fig. 1** weiter ersichtlich ist, ist der Außenlamellenträger 4 einerseits an seinem Umfang mit einem nicht näher bezeichneten Rotorträger bzw. mit dem Rotor 3a der Elektromaschine 3 wirksam verbunden, und ist andererseits mithilfe von zwei Lagerelementen 13 und 14 auf einem Absatz bzw. einem Flansch 10a des Kühlmantels 10 der Elektromaschine 3 gelagert. Die Eingangswelle 9 der Kupplung 2 ist an einem Absatz bzw. Flansch 10a des Kühlmantels 10 gelagert, insbesondere mit weiteren Lagerelementen 15 und 16.

**Fig. 1** zeigt eine sehr kompakte Bauform eines Hybrid-Antriebsmoduls 1 mit einem aus einem, hier nicht explizit dargestelltem Zweimassenschwungrad und dem Fliehkraftpendel 11 gebildeten "Schwingungstilger", wobei das Zweimassenschwungrad und Fliehkraftpendel 11 räumlich voneinander getrennt angeordnet sind, diese aber durch deren kraft-, stoff- und/oder formschlüssige Verbindung nun eine "gemeinsame Einheit" zur Verringerung/Dämpfung von Drehmomentschwingungen auf der Primärseite der Kupplung 2 bilden, was die eingangs genannten Vorteile realisiert.

### Bezugszeichenliste

1 Hybrid-Antriebsmodul
2 Kupplung
3 Elektromaschine
3a Rotor
4 Außenlamellenträger
4a Außenlamellen
4b Raum
5 Innenlamellenträger
5a Innenlamellen
6 Betätigungskolben
7 Getriebeeingangswelle
8 Mitnehmerscheibe
9 Eingangswelle der Kupplung
10 Kühlmantel
10a Flansch
11
Fliehkraftpendel
12 Schraubverbindung
13 Lagerelement
14 Lagerelement
15 Lagerelement
16 Lagerelement

## Patentansprüche

1. Hybrid-Antriebsmodul (1) für ein Kraftfahrzeug, mit mindestens einer Kupplung (2) und mit mindestens einer Elektromaschine (3), wobei die
Kupplung (2) einen Außenlamellenträger (4) und einen Innenlamellenträger (5) aufweist, wobei am Außenlamellenträger (4) Außenlamellen (4a) und
am Innenlamellenträger (5) Innenlamellen (5a) angeordnet sind, wobei der Außenlamellenträger (4) mit dem Rotor (3a) der Elektromaschine (3) und
einer Getriebeeingangswelle (7) wirksam verbunden ist, wobei der Innenlamellenträger (5) mit einem Verbrennungsmotor wirksam
verbunden ist, und wobei ein Zweimassenschwungrad und ein Fliehkraftpendel (11) räumlich voneinander getrennt angeordnet
sind, **dadurch gekennzeichnet, dass** das Fliehkraftpendel (11) wirksam mit dem Innenlamellenträger (5) verbunden ist, wobei das Fliehkraftpendel (11) direkt an dem Innenlamellenträger (5) angeordnet und/oder befestigt ist.

2. Hybrid-Antriebsmodul nach Anspruch 1, **dadurch gekennzeichnet, dass** das Zweimassenschwungrad mit dem Innenlamellenträger (5) wirksam gekoppelt ist.

3. Hybrid-Antriebsmodul nach einem der vorstehenden Ansprüche, **dadurch gekennzeichnet, dass** der Außenlamellenträger (4) im Wesentlichen L-förmig oder C-förmig ausgebildet ist.

4. Hybrid-Antriebsmodul nach einem der vorstehenden Ansprüche, **dadurch gekennzeichnet, dass** der Außenlamellenträger (4) an seinem Umfang mit dem Rotorträger bzw. Rotor (3a) der Elektromaschine (3) wirksam verbunden und/oder gekoppelt ist.

5. Hybrid-Antriebsmodul nach einem der vorstehenden Ansprüche, **dadurch gekennzeichnet, dass** der Außenlamellenträger (4) zumindest teilweise im Wesentlichen C-förmig ausgebildet ist und mithilfe von mindestens einem Lagerelement (13, 14) auf einem Flansch (10a) des Kühlmantels (10) der Elektromaschine (3) gelagert ist.

6. Hybrid-Antriebsmodul nach einem der vorstehenden Ansprüche, **dadurch gekennzeichnet, dass** die Eingangswelle (9) der Kupplung (2) an einem Flansch (10a) des Kühlmantels (10) gelagert ist.

7. Hybrid-Antriebsmodul nach einem der vorstehenden Ansprüche, **dadurch gekennzeichnet, dass** durch den Außenlamellenträger (4) zumindest teilweise ein Raum (4b) zur Anordnung des Fliehkraftpendel (11) begrenzt ist.

8. Hybrid-Antriebsmodul nach einem der vorstehenden Ansprüche, **dadurch gekennzeichnet, dass** der Außenlamellenträger (4) über eine Mitnehmerscheibe (8) mit der Getriebeeingangswelle (7) wirksam verbunden ist.

9. Hybrid-Antriebsmodul nach einem der vorstehenden Ansprüche, **dadurch gekennzeichnet, dass** das Fliehkraftpendel (11) kraft-, stoff- und/ oder formschlüssig mit dem Zweimassenschwungrad verbunden ist.

## Claims

1. A hybrid drive module (1) for a motor vehicle, having at least one clutch (2) and having at least one electric machine (3), wherein the clutch (2) has an outer disc carrier (4) and an inner disc carrier (5), wherein outer discs (4a) are arranged on the outer disc carrier (4) and inner discs (5a) are arranged on the inner disc carrier (5), wherein the outer disc carrier (4) can be connected and/or is connected operatively to the rotor (3a) of the electric machine (3) and a transmission input shaft (7), wherein the inner disc carrier (5) is connected operatively to an internal combustion engine, and wherein a dual-mass flywheel and a centrifugal force pendulum (11) are arranged spatially separated from one another, **characterized in that** the centrifugal force pendulum (11) is connected operatively to the inner disc carrier (5), wherein the centrifugal force pendulum (11) is arranged and/or fastened directly on the inner disc carrier (5).

2. The hybrid drive module according to Claim 1, **characterized in that** the dual-mass flywheel is operatively coupled with the inner disc carrier (5).

3. The hybrid drive module according to any one of the preceding claims, **characterized in that** the outer disc carrier (4) is designed substantially L-shaped or C-shaped.

4. The hybrid drive module according to any one of the preceding clams, **characterized in that** the outer disc carrier (4) is operatively connected and/or coupled on its circumference with the rotor carrier or rotor (3a) of the electric machine (3).

5. The hybrid drive module according to any one of the preceding claims, **characterized in that** the outer disc carrier (4) is designed at least partially substantially C-shaped and is supported by using at least one bearing element (13, 14) on a flange (10a) of the cooling jacket (10) of the electric machine (3).

6. The hybrid drive module according to any one of the preceding claims, **characterized in that** the input shaft (9) of the clutch (2) is supported on a flange (10a) of the cooling jacket (10).

7. The hybrid drive module according to any one of the preceding claims, **characterized in that** a space (4b) for the arrangement of the centrifugal force pendulum (11) is at least partially limited by the outer disc carrier (4).

8. The hybrid drive module according to any one of the preceding claims, **characterized in that** the outer disc carrier (4) is operatively connected to the transmission input shaft (7) by means of a driving disc (8).

9. The hybrid drive module according to any one of the preceding claims, **characterized in that** the centrifugal force pendulum (11) is connected non-positively, integrally, and/or positively to the dual-mass flywheel.

## Revendications

1. Module d'entraînement hybride (1) pour un véhicule automobile, avec au moins un embrayage (2) et avec au moins un moteur électrique (3), l'embrayage (2) comportant un support de lamelles extérieures (4) et un support de lamelles intérieures (5), dans lequel des lamelles extérieures (4a) sont disposées sur le support de lamelles extérieures (4), et des lamelles intérieures (5a) sont disposées sur le support de lamelles intérieures (5), dans lequel le support de lamelles extérieures (4) peut être et/ou est raccordé fonctionnellement au rotor (3a) du moteur électrique (3) et d'un arbre d'entrée de boîte de vitesses (7), dans lequel le support de lamelles intérieures (5) est raccordé fonctionnellement à un moteur à combustion interne, et dans lequel un volant bimasse et un pendule centrifuge (11) sont disposés séparément l'un de l'autre dans l'espace, **caractérisé en ce que** le pendule centrifuge (11) est raccordé fonctionnellement au support de lamelles intérieures (5), dans lequel le pendule centrifuge (11) est disposé et/ou fixé directement sur le support de lamelles intérieures (5).

2. Module d'entraînement hybride selon la revendication 1, **caractérisé en ce que** le volant bimasse est couplé fonctionnellement au support de lamelles intérieures (5).

3. Module d'entraînement hybride selon l'une des revendications précédentes, **caractérisé en ce que** le support de lamelles extérieures (4) est constitué essentiellement en forme de L ou en forme de C.

4. Module d'entraînement hybride selon l'une des revendications précédentes, **caractérisé en ce que**, sur sa périphérie, le support de lamelles extérieures (4) est raccordé et/ou couplé fonctionnellement au support de rotor ou respectivement au rotor (3a) du moteur électrique (3).

5. Module d'entraînement hybride selon l'une des revendications précédentes, **caractérisé en ce que** le support de lamelles extérieures (4) est constitué au moins partiellement essentiellement en forme de C et, à l'aide d'au moins un élément de palier (13, 14), est supporté sur une bride (10a) de l'enveloppe de refroidissement (10) du moteur électrique (3).

6. Module d'entraînement hybride selon l'une des revendications précédentes, **caractérisé en ce que** l'arbre d'entrée (9) de l'embrayage (2) est supporté sur une bride (10a) de l'enveloppe de refroidissement (10).

7. Module d'entraînement hybride selon l'une des revendications précédentes, **caractérisé en ce qu'**un espace (4b) destiné à l'agencement du pendule centrifuge (11) est limité au moins partiellement par le support de lamelles extérieures (4).

8. Module d'entraînement hybride selon l'une des revendications précédentes, **caractérisé en ce que** le support de lamelles extérieures (4) est raccordé fonctionnellement à l'arbre d'entrée de boîte de vitesses (7) par le biais d'un disque d'entraînement (8).

9. Module d'entraînement hybride selon l'une des revendications précédentes, **caractérisé en ce que** le pendule centrifuge (11) est raccordé au volant bimasse par liaison de force, de matière et/ou de forme.
